(19) Europäisches Patentamt
European Patent Office
Office européen des brevets

(11) Veröffentlichungsnummer: **0 180 051**
**B1**

(12) # EUROPÄISCHE PATENTSCHRIFT

(45) Veröffentlichungstag der Patentschrift: **04.04.90**

(51) Int. Cl.[5]: **C 08 F 8/32,** C 09 D 133/14, C 09 D 5/44

(21) Anmeldenummer: **85112449.5**

(22) Anmeldetag: **02.10.85**

(54) **Verfahren zur Herstellung eines fremdvernetzenden, epoxidgruppenfreien Amino-Poly(meth)-acrylatharzes, das dabei erhältliche Harz, dessen Verwendung, es enthaltendes KTL-Bad und dessen Verwendung zum Beschichten von Gegenständen.**

(30) Priorität: **04.10.84 DE 3436346**

(43) Veröffentlichungstag der Anmeldung:
**07.05.86 Patentblatt 86/19**

(45) Bekanntmachung des Hinweises auf die Patenterteilung:
**04.04.90 Patentblatt 90/14**

(84) Benannte Vertragsstaaten:
**AT BE CH DE FR GB IT LI NL SE**

(56) Entgegenhaltungen:
**EP-A-0 003 067**
**WO-A-84/04099**
**DE-A-1 595 501**
**DE-A-2 325 177**
**FR-A-2 147 330**

**CHEMICAL ABSTRACTS, Band 83, Nr. 24, 1975, Seite 130, Nr. 195378y, Columbus, Ohio, US; & JP - A - 7 576 140**

(73) Patentinhaber: **Herberts Gesellschaft mit beschränkter Haftung**
**Christbusch 25**
**D-5600 Wuppertal 2 (DE)**

(72) Erfinder: **Patzschke, Hans-Peter, Dr.**
**am Heckendorn 71**
**D-5600 Wuppertal 2 (DE)**
Erfinder: **Cerny, Peter Wolfgang**
**Mozartstrasse 48**
**D-5600 Wuppertal 1 (DE)**
Erfinder: **Goebel, Armin**
**Osterroder-Strasse 27**
**D-5600 Wuppertal 2 (DE)**
Erfinder: **Stransky, Karlheinz, Dipl.-Ing.**
**Lentzestrasse 38**
**D-5600 Wuppertal 2 (DE)**

(74) Vertreter: **Türk, Gille, Hrabal**
**Brucknerstrasse 20**
**D-4000 Düsseldorf 13 (DE)**

**EP 0 180 051 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Courier Press, Leamington Spa, England.

**Beschreibung**

Die vorliegende Erfindung betrifft ein Verfahren zur Herstellung eines fremdvernetzenden epoxidgruppenfreien Amino - Poly(meth)acrylatharzes (Amino-polyacrylat- und/oder -methacrylatharzes) für wasserverdünnbare Lacke mit einer Aminzahl von 30 bis 150 und einer Hydroxylzahl von 30 bis 450. Die Erfindung betrifft auch das bei dem Verfahren erhältliche Harz und die Verwendung des Harzes als Bindemittel für KTL-Bäder. Die Erfindung betrifft außerdem dieses Bindemittel enthaltende KTL-Bäder und deren Verwendung zum Beschichten von Gegenständen mit elektrisch leitender Oberfläche.

Außer den fremdvernetzenden Amino-Poly(meth)acrylatharzen enthalten diese KTL-Bäder zusätzlich Vernetzungsmittel wie Formaldehyd - Kondensationsprodukte, blockierte Polyisocyanate und/oder Harze mit umesterungsfähigen Estergruppen und gegebenenfalls hydroxyfunktionelle Harze.

Es ist bekannt, daß basische organische Bindemittelsysteme, die durch Salzbildung in einem wäßrigen Medium dispergiert sind, auf einem leitenden metallischen Gegenstand, der in ein wäßriges Bad (ET-Bad) getaucht wird, in einem elektrischen Feld an der Kathode koaguliert werden können. Als Korrosionsschutzgrundierungen werden hierfür in der Praxis meist Aminoepoxidharzsysteme eingesetzt, die durch Reaktion von Epoxidharzen auf Basis Bisphenol A mit verschiedenen Aminen und/oder Aminoalkoholen hergestellt werden. Um den abgeschiedenen Film zu vernetzen, werden Vernetzungskomponenten zugesetzt, die nicht wasserverdünnbar zu sein brauchen, sondern mit dem Basisharz in den Lack einemulgiert und gleichzeitig koaguliert werden. Die thermische Filmvernetzung erfolgt hierbei nach zwei grundsätzlich unterschiedlichen Verfahren, z.B. durch Zusatz von blockierten Polyisocyanaten (DE—A—20 57 799, DE—A—21 31 060, DE—A—22 52 536, DE—A—22 65 195, DE—A—26 34 211) oder von umesterungsfähigen Vernetzungsmitteln (EP—A—0 004 090, EP—A—0 012 463, EP—A—0 040 867, EP—A—0 066 859, EP—A—0 082 291, DE—A—31 03 642, DE—A—32 15 891, DE—A—32 24 864, DE—A—32 25 874, DE—A—33 15 469, DE—A—33 22 766). Die KTL-Bäder des Standes der Technik werden im allgemeinen nur zur Herstellung von Grundierungen verwendet, weil die eingesetzten Qualitäten auf Basis Amin-epoxidharz beim Einbrennen vergilben und in der Langzeitbewitterung kreiden. Es ist damit nicht möglich, die Lacke so zu pigmentieren, daß sie für eine Decklackierung geeignet sind. Außerdem ist beim Herstellen von Zweischichtlackierungen damit zu rechnen, daß beim Einbrennen des Decklacks, wenn dabei eine höhere Einbrenntemperatur gewünscht wird, als für die Grundierung notwenig ist, durch Crackprodukte, die aus der Grundierung stammen, manchmal wolkenartige Farbtonveränderungen im Decklack auftreten und das endgültige optische Erscheinungsbild der Deckschicht stören. Diese Nachteile sollten durch Anwendung eines aminogruppenhaltigen Poly(meth)acrylatharzsystems zu überwinden sein.

Versucht man jedoch die in den verschiedenen Patenten angegebenen Aminopolyacrylate einzusetzen, so stößt man hinsichtlich der Eigenschaften der damit ethaltenen Überzüge auf einige Nachteile. In der DE—A—15 46 854 werden OH-gruppenhaltige Acrylcopolymerisate unter Verwendung von 3 bis 30 Gew.% wenigstens einer ethylenisch ungesättigten Aminoverbindung, z.B. Dialkylaminoalkyl(meth)acrylat, Dialkylamino(meth)acrylamid oder fünf- bis sechsgliedrige N-Vinyl-Heterocyclen hergestellt und in Kombination mit Formaldehyd - Kondensationsharzen abgeschieden. Nach diesem Verfahren werden die ET-Bäder im allgemeinen stark sauer eingestellt, weil die Vernetzungsreaktion mit Melaminharzen sauer katalysiert wird. Es entsteht dabei der Nachteil, daß die Eisenteile von Becken, Rohrleitungen und Pumpen angegriffen werden und der Film durch die Eisenionen eine gelbe, oft auch wolkenartige Verfärbung erhält.

In der DE—A—20 57 799 werden aminogruppenhaltige Copolymerisate durch Einpolymerisieren von aminhaltigen Estern monofuntioneller oder difunktioneller ungesättigter Säuren wie tert. - Butylaminoethylmethacrylat oder Dimethylaminoethylmethacrylat oder vinylhaltiger heterocyclischer Verbindungen wie N-Vinylpiperidin hergestellt und nach Kombination mit blockierten Polyisocyanaten beim Einbrennen vernetzt. Poly(meth)acrylatharze mit diesem chemischen Aufbau machen Schwierigkeiten beim elektrophoretischen Abscheiden von gleichmäßigen Schichten. Sie neigen selbst bei 100%iger Neutralisation noch zu Fällungsscheinungen und geben saure pH-Werte. Die aufgeführten Blockierungsmittel sind so stabil, daß sie nur bei höheren Temperaturen abspalten. Die großen Spaltprodukte führen zu überhöhten Verlusten, die sogar, wie das in den Beispielen eingesetzte Phenol, umweltschädlich sein können.

Nach DE—A—15 95 501 werden durch Emulsionspolymerisation monoethylenisch ungesättigte Monomere, die noch eine Epoxidgruppe enthalten, einpolymerisiert. Diese Oxiranringe werden vor, während oder nach der Polymerisation mit Aminen umgesetzt. Auf Seite 3, Mitte, wird aufgeführt, daß durch Lösungspolymerisation Copolymere mit meist niedrigerem Molekulargewicht erhalten werden, deren polymere Teilchen sich nicht stabil suspendieren lassen.

In der DE—A—23 25 177 werden hitzehärtbare Anstrichmittel in Form einer wäßrigen Dispersion oder Lösung beschrieben, die ein Harzmaterial enthalten, das hergestellt wird durch Umsetzung eines sekundären Amins, besonders vorteilhaft eines Alkanolamins, mit einem Copolymerisat, das Epoxidgruppen enthält. Diese Amine werden in einer Menge von 0,1—1,0 Äquivalenten pro Äquivalent Epoxidgruppe verwendet. Werden diese Mengen nicht eingehalten, so bleibt nicht umgesetztes Amin zurück, das die Wasserbeständigkeit und andere Eigenschaften des aus dem Anstrichmittel erhaltenen gehärteten Überzuges beeinträchtigt. Erfindungsgemäß wird ein fremdvernetzendes epoxidgruppenfreies Amino - Poly(meth)acrylharz für wasserverdünnbare Lacke bereitgestellt, das keine Gelierungstendenzen

zeigt, da keine Epoxidgruppen verbleiben und das zu gehärteten Überzügen mit ausgezeichneten Eigenschaften führt. Erfindungsgemäß wird dies durch Einsatz eines Überschusses an im folgenden näher definierten primären und/oder sekundären Monoaminen und/oder Aminoalkoholen erzielt.

Nach DE—A—28 01 523 werden epoxidgruppenhaltige Copolymerisate hergestellt, die 40 bis 90 Gew.% ungesättigte Dien-Monomeren enthalten. Die Epoxidgruppen werden mit Amin umgesetzt, wobei "in manchen Fällen" im wesentlichen alle Epoxidgruppen mit Amin umgesetzt werden, aber in der Regel überschüssige Epoxidgruppen im Harz verbleiben (Seite 4 unten bis Seite 5 oben). Es wird also auch hier der Nachteil des Verbleibens von Epoxidgruppen in Kauf genommen, der darin besteht, daß sich beim Lagern der Harze ein Viskositätsanstieg bemerkbar macht, was zu unbrauchbaren Produkten führen kann. Unabhängig hiervon neigen diese Harze wegen des Einbaus von Dien-Monomeren nach dem Einbrennen zum Vergilben.

Alle nach diesen Patenten hergestellten basischen Copolymere bringen häufig Stabilitätsschwierigkeiten mit sich. Sie zeigen sich in starken Eindickungs- und Gelierungstendenzen, besonders beim Einbau von stark basischen Dialkylaminen, sowie in Fällungserscheinungen, die beim Altern der ET-Bäder auftreten oder in der Oberfläche des abgeschiedenen Films, die durch ihre unregelmäßige Schichtdickenverteilung, bzw. durch eine zu große Durchbruchsneigung Schwierigkeiten macht.

Der Erfindung liegt die Aufgabe zugrunde, nicht vergilbende an der Kathode abscheidbare Bindemittel zu finden, die vorzugsweise bei einem pH-Wert über 5.0 wasserverdünnbar sind, fremdvernetzen und auch noch bei längerem Gebrauch des Beckens eine einwandfreie Oberfläche ergeben.

Es wurde überraschenderweise gefunden, daß man stabile, auch bei höherem pH-Werten gut wasserverdünnbare, fremdvernetzende epoxidgruppenfreie Amino - Poly(meth)acrylharze mit einer Aminzahl von 30 bis 150 und einer Hydroxylzahl von 30 bis 450 erhält, wenn man in einem Epoxidgruppen enthaltenden durch Lösungspolymerisation erhaltenen Poly(meth)acrylatharz mit einer mittleren Molmasse $\overline{Mn}$ von 600 bis 10000 und einem Epoxyäquivalentgewicht von 300 bis 4000 mit einem Überschuß an primären und/oder sekundären Monoaminen und/oder Aminalkoholen die niedriger sieden oder wasserdampfflüchtiger als das Lösungsmittel sind, alle freien Epoxidgruppen umsetzt und die nicht umgesetzten überschüssigen Aminverbindungen abdestilliert. Die Vernetzung der aus den Harzen gebildeten hydroxylgruppenhaltigen Films erfolgt durch zugesetzte Vernetzungsmittel wie Amin - Formaldehydharze, blockierte Polyisocyanate und/oder Harze mit umesterungsfähigen Estergruppen unter Zusatz von geeigneten Katalysatoren.

Gemäß der Erfindung werden die aus dem vorstehend diskutierten Stand der Technik bekannten und üblicherweise eingesetzten Epoxidgruppen enthaltenden Poly(meth)acrylatharze als Ausgangsprodukte verwendet. Diese enthalten als wesentliche Komponente epoxidgruppenhaltige einpolymerisierte monoethylenisch ungesättigte Monomere. Deren Anteil im Copolymerisat beträgt im allgmeinen 8 bis 50 Gew.%. Bevorzugt liegt—auch gemäß dem Stand der Technik—die untere Grenze für deren Anteil bei etwa 12 Gew.% und die obere Grenze bei etwa 35 Gew.%. Epoxidgruppen enthaltende ungesättigte Monomere sind Mono- und/oder Diglycidylverbindungen von ungesättigten Säuren, Säureamiden oder Alkoholen wie beispielsweise Glycidylester der (Meth)acrylsäure, Fumarsäure oder Maleinsäuremonoalkylester, Glycidylverbindungen von (Meth)acrylsäureamid, Fumarsäurediamid oder Maleinimid und/oder Glycidylether von Vinylalkohol oder Allylalkohol. Andere geeignete Verbindungen sind Monoglycidylester von Dicarbonsäuremonoestern mit ungesättigten Alkoholen wie Phthalsäure - allyl - glycidylester oder Monoglycidylether von Hydroxyalkyl(meth)acrylsäureestern. Es können jedoch auch Vinyl- oder Allylester von epoxidierten ungesättigten Fettsäuren eingesetzt werden wie 2.3 - Epoxy - buttersäure - allylester oder Epoxy - stearinsäure - allylester. Außerdem eignen sich auch Diolefine, deren eine Doppelbindung epoxidiert worden ist, wie Vinylethylenoxid, 1 - Methyl - 1 - vinyl - ethylenoxid oder 3.4 - Epoxy - 1 - vinyl - cyclohexan. Glycidylacrylat und Glycidylmethacrylat werden für die Copolymerisation bevorzugt.

Zum Einstellen der mechanischen und vernetzenden Eigenschaften des abgeschiedenen Films werden 92 bis 50 Gew.% der restlichen ethylenisch ungesättigten Monomeren bzw. Monomerengemische aus folgenden Gruppen ausgewählt und einpolymerisiert:

1. Acrylsäure-alkylester, Methacrylsäure-alkylester und/oder Maleinsäure-dialkylester, wobei die Alkylreste aus 1 bis 20 Kohlenstoffatomen bestehen und in linearer oder verzweigter aliphatischer Kette und/oder als cycloaliphatischer und/oder (alkyl) aromatischer Rest angeordnet sind. Zu diesen Verbindungen zählen beispielsweise n-Butylacrylat, tert.-Butylacrylat, 2-Ethylhexylacrylat, Methylmethacrylat, iso-Propylmethacrylat und/oder Cyclohexylacrylat. Es können auch ungesättigte Ether wie Ethoxyethylmethacrylat oder Tetrahydrofurfurylacrylat eingesetzt werden. Zu den einpolymerisierbaren Monomeren gehören auch Vinylester von $C_2$ bis $C_{20}$ - Alkancarbonsäuren, wie der Vinylester der Versaticsäure®.

2. (Alkyl)-vinyl-benzole, wie Styrol, α-substituierte Styrole, wie α-Methylstyrol, o, m und p-Alkylstyrole wie Vinyltoluol oder p-tert-Butylstyrol und/oder halogenierte (Alkyl)-vinyl-benzole wie o- und/oder p-Chlorstyrol.

3. Hydroxylgruppen enthaltende einpolymerisierbare Monomere sind solche, die außer einer ethylenisch ungesättigten copolymerisierbaren Gruppe noch mindestens eine Hydroxylgruppe an einem $C_2$ bis $C_{20}$ - Kohlenstoffgerüst enthalten. Zu diesen Verbindungen gehören Allylalkohol, Monovinylether von Polyolen, besonders Diolen, wie Monovinylether des Ethylenglykols und Butandiols, sowie hydroxylgruppenhaltige Allylether oder -ester wie 2,3 - Dihydropropyl - allylether, Trimethylolpropanmono -

allylether oder 2,3 - Dihydroxypropansäure - allylester. Besonders geeignet sind Acrylsäure - hydroxyalkylester, Methacrylsäurehydroxylalkylester oder Fumarsäure - dihydroxyalkylester, deren lineare, verzweigte oder cyclische Alkylgruppe 2 bis 20 Kohlenstoffatome enthält, wie β - Hydroxypropyl - methacrylat, Hydroxyethyl - acrylat, Butandiol - 1,4 - monoacrylat, 2,3 - Dihydroxypropylacrylat, Pentaerythrit - monomethacrylat, Polypropylenglykol - monoacrylat oder Polypropylenglykol - monomethacrylat verschiedenen Molekulargewichts, sowie auch Hydroxyalkyl - acrylamid, Hydroxyalkyl - methacrylamid oder Hydroxyalkyl - fumarsäurediamid wie Hydroxyethyl - acrylamid oder 2 - Hydroxypropylmethacrylamid. Besonders elastische Eigenschaften sind beim Einsatz eines Reaktionsproduktes von Hydroxyalkyl - (meth)acrylat mit ε - Caprolacton zu erhalten. Wegen der höheren Reaktivität für Umesterungsreaktionen werden ungesättigte Monomere mit primären Hydroxylgruppen bevorzugt. Besonders geeignet sind Hydroxyethyl(meth)acrylate.

Die Copolymerisation erfolgt in bekannter Weise durch Lösungs polymerisation unter Zusatz von radikalischen Initiatoren wie Peroxiden, Hydroperoxiden, Perestern oder thermisch instabilen Azoverbindungen, sowie gegebenenfalls Molekulargewichtsreglern. Es wird die Lösungspolymerisation in organischen Lösemitteln bzw. Lösemittelgemischen, die mit Wasser verdünnbar sind, bevorzugt. Solche Lösemittel sind beispielsweise Ethylenglykol, Ethylenglykolmonoethylether, Ethylenglykol - monobutylether, Diethylenglykol, Triethylenglykol, Diethylenglykol - dimethylether, Propylenglykol, Propylenglykol - monomethylether, Dipropylenglykol - monomethylether, Diacetonalkohol, Ethanol, Isopropanol, sek. Butanol, tert.-Butanol, Aceton, Dioxan und/oder Tetrahydrofuran. Die Polymerisationstemperatur ist abhängig vom Siedepunkt des Lösemittels under der Zerfallstemperatur des Initiators und bewegt sich zwischen 60 und 160°C. Die Polymerisation muß vollständig ablaufen, weil sonst reversible Nebenreaktionen der aktivierten Doppelbindung der Monomeren mit den sekundären Aminen auftreten.

Die Auswahl der Monomeren und des Polymerisationsverfahrens erfolgt, so daß das Copolymere mit einer mittleren Molmasse ($\overline{Mn}$) von 600 bis 10 000 ein Epoxyäquivalentgewicht von 300 bis 4000 aufweist. Als besonders zweckmäßig hat es sich erwiesen, wenn die Mischpolymerisate K-Werte (nach Fikentscher, Cellulosechemie 13 (1932), Seite 12 bis 25) von 10 bis 50 haben. Diese Molekulargewichte entsprechen Viskositäten von mindestens etwa 0.3 Pas nach Verdünnen mit Ethylenglykol - monoethern auf 60 Gew.% bei 25°C und hochstens 8.0 Pas nach Verdünnen auf 50 Gew.%. Die geeigneten mittleren Molmassen bzw. geeignete Viskositäten können auch dadurch erhalten werden, daß Harze mit höherer und niedrigerer Viskosität bzw. Molmasse vermischt werden.

Die Zahl der Epoxidgruppen bestimmt die Zahl der damit zur Umsetzung kommenden Aminogruppen und damit auch die Löslichkeit des Produktes. Es soll mindestens eine Epoxidgruppe pro Molekül vorhanden sein.

Die Zahl der primären und/oder sekundären Hydroxylgruppen entspricht einer Hydroxylzahl von 30 bis 450 mg KOH/g Festharz und wird so optimiert, daß bei Einbrennen des Lackes ein gut vernetzter, lösemittelbeständiger Film entsteht. Berücksichtigt man, daß beim Umsetzen mit Amin aus jeder Epoxidgruppe eine sekundäre OH-Gruppe entsteht, so ist es angebrachte, mindestens eine weitere Hydroxylgruppe, bevorzugt primäre Hydroxylgruppe pro Molekül einzupolymerisieren.

Die Auswahl der ungesättigten Monomeren, die keine weiteren reaktiven funktionellen Gruppen enthalten, erfolgt nach wirtschaftlichen Gesichtspunkten und nach der Glasübergangstemperatur (Tg) des Copolymeren, die vorzugsweise etwa zwischen −20° und +50°C liegt und die Härte - Elastizitätseigenschaften beeinflußt. Die Copolymeren können gegebenenfalls eine geringe Menge Acrylamid, Methacrylamid, Maleinsäureamid, Maleinsäure - imid odere die entsprechenden Methylol- oder Methylolether - Verbindungen enthalten.

All dies ist jedoch Stand der Technik, und wie bereits ausgeführt, werden gemäß der Erfindung als Ausgangsprodukte die auf diesem technischen Gebiet üblicherweise verwendeten Poly(meth)acrylatharze eingesetzt, wobei diese jedoch nicht Dien-Verbindungen als Monomere einkondensiert enthalten, weil diese zu Vergilbungen der eingebrannten Lacke führen.

Diese Poly(meth)acrylatharze werden gemäß der Erfindung mit einem Überschuß an primären und/oder sekundären Monoaminen und/oder Aminoalkoholen zur Umsetzung aller freien Epoxidgruppen umgesetzt, und die im Überschuß eingesetzten nicht umgesetzten Aminoverbindungen werden dann abdestilliert. Die Amine oder Aminoalkohole enthalten eine Aminogruppe pro Molekül. Die Umsetzung erfolgt vorzugsweise bei Temperaturen von etwa 40 bis 200°C, speziell 60 bis 120°C unter Normaldruck. Liegt die gewünschte Reaktionstemperatur über dem Siedepunkt des Amins, so kann auch unter Druck gearbeitet werden, besonders bis zu etwa 10 bar. Wenn unter 40°C gearbeitet wird, ist die Reaktionsgeschwindigkeit in Abhängigkeit vom epoxidgruppenhaltigen Harz oft so niedrig, daß eine längere Zeit erforderlich wird. Wenn die Reatkionstemperatur zu hoch gewählt wird, verstärkt sich als Nebenreaktion die basisch katalysierte Polyveretherung der noch nicht umgesetzten Epoxidgruppen. Die Reaktionszeit liegt vorzugsweise etwa zwischen 1 bis 5 Stunden. Zum Vervollständigen der Reaktion ist es oft vorteilhaft, wenn zuerst bei niedrigerer Temperatur, später bei höherer Temperatur gearbeitet wird. Durch Addition von aciden Wasserstoffatomen an den Ethersauerstoff wird die positive Partialladung des Oxiranringes erhöht und dieser der nucleophilen Addition des Amins leichter zugänglich gemacht. So wird oft durch Zusatz von Wasser, Alkohol, Phenol, Säure oder sauren Metallsalzen eine Reaktionsbeschleunigung erzielt. Im allgemeinen braucht jedoch die Reaktion von Epoxidgruppen, besonders die von Glycidylether- oder Glycidylestergruppen, mit Aminen nicht katalysiert zu werden.

Das wesentliche Merkmal der Erfindung liegt darin, daß das Amin im Überschuß eingesetzt wird. Überraschenderweise wird dadurch ein Reaktionsprodukt erhalten, das keine Neigung zum Gelieren mehr zeigt. Um eine vollständige Umsetzung aller Epoxidgruppen zu erreichen, reicht insbesondere dann, wenn bei verhältnismäßig hohen Temperaturen über längere Zeit umgesetzt wird, eine Menge von mehr als 1.01 Äquivalenten Aminogruppen bezogen auf 1 Äquivalent Epoxidgruppen aus. Vorzugsweise wird jedoch ein etwas größerer Überschuß an Aminogruppen eingesetzt, d.h. mehr als 1.04 Äquivalente und besonders bevorzugt mehr als 1.06 Äquivalente Amin auf 1 Äquivalent Epoxidgruppen. Zweckmäßig wird entweder die erwärmte Epoxidharz - Lösung lamgsam in das vorgelegte Amin oder das Amin bei Reaktionstemperatur schnell in ein geschlossenes Gefäß mit der gut gerührten Epoxidharz-Lösung gegeben. Das Herstellungsverfahren und die Geschwindigkeit der Aminzugabe beeinflussen die als Nebenreaktion ablaufende Polyveretherung und damit die Viskosität des Harzes. Die obere Grenze des Aminüberschusses beträgt zweckmäßig etwa 1.5, besonders 1.2, speziell 1.15 Äquivalente Amin. Aus wirtschaftlichen Erwägungen wird ein möglichst niedriger Aminüberschuß angestrebt.

Es ist notwendig, diesen Aminüberschuß vollständig zu entfernen. Deshalb werden solche Amine (darunter werden auch Aminoalkohole verstanden) eingesetzt, die sich bei solchen Bedingungen (Druck, Temperatur, Zeit) abdestillieren lassen, bei denen keine unerwünschten Veränderungen des Harzes eintreten. Die Destillation erfolgt unter Normaldruck oder unter vermindertem Druck, besonders mit Hilfe eines Dünnschicht-Verdampfers. Nach einem anderen bevorzugten Verfahren destilliert man die Amine mit Hilfe von Wasserdampf ab. Der Dampf sorgt für eine besonders starke Durchmischung des Harzes und erleichtert das Abdestillieren des überschüssigen Amins. Hält man dabei das Harz bei einer Temperatur von etwa 100 bis 110°C bei Normaldruck, so verhindert man das Anreichern von kondensiertem Wasser im Kolben. Diese Wasserdampfdestillation kann erfolgen mit gesättigtem oder überhitztem Druck bei erniedrigten Temperaturen. Sie ist beendet, wenn im überdestillierten Wasser kein Amin mehr nachweisbar ist. Bei Anwendung dieses Verfahrens ist die Abstimmung von Lösemittel, das wie oben beschrieben bei der Copolymerisation eingesetzt wird, und Amin besonders wichtig. So muß das Amin niedriger sieden oder wasserdampfflüchtiger sein als das Lösemittel. Folgende Amine können beispielsweise für die Reaktion eingesetzt werden: $C_1$ bis $C_6$ - Dialkylamine mit gleichen oder verschiedenen Alkylgruppen im Molekül wie Dimethyl-, Diethyl-, Diisopropyl- Dibutylamin, Methylethyl-, Methylpropyl-, Methylbutylamin, monocycloaliphatische Amine wie Morpholin, Piperidin, Pyrrolidin und/oder Monoalkanolamine wie N - Methylaminoethanol und/oder Dialkanolamine wie Diethanolamin, Diisopropanolamin. Beispiele für primäre Amine oder Aminoalkohole sind $C_1$ bis $C_6$-Alkylamine wie Ethylamin oder Aminoethanol. In jedem Fall sind $C_1$ bis $C_4$-Alkylgruppen, insbesondere $C_1$ und/oder $C_2$-Alkylgruppen bevorzugt. Besonders bevorzugt sind die oben erwähnten sekundären Amine, die gegebenenfalls im Gemisch mit den oben erwähnten primären Aminen eingesetzt werden können. Sekundäre Amine vermindern die Neigung zu höher viskosen Produkten. Die Reaktion mit überschüssigen niedrigen Dialkylaminen wie Dimethylamin oder Diethylamin ist besonders vorteilhalft, weil diese niedrigsiedenden Amine aufgrund ihrer hohen Besizität eine gute Löslichkeit bzw. einen hohen pH-Wert im ET-Bad erzielen. Da stark besische Amine jedoch die Reaktion von Epoxidgruppen untereinander katalysieren, hätte man eine unerwünschte Polymerisation unter Viskositätsanstieg und mit der Gefahr des Gelierens befürchten müssen, wie dies die später beschriebenen Vergleichsbeispiele zeigen. Überraschenderweise ist dies jedoch gemäß der Erfindung nicht der Fall. Die Aminzahl liegt zwischen 30 und 150, bevorzugt zwischen 45 und 100 (mg KOH/g Festharz).

Die vorstehend beschriebenen fremdvernetzenden, epoxidgruppenfreien Amino - Poly(meth)acrylatharze gemäß der Erfindung werden verwendet als Bindemittel für die kathodische Abscheidung in ET-Bädern (KTL-Bäder). Sie können aber auch als Bindemittel in Lacken eingesetzt werden, die nach anderen üblichen Auftragsverfahren auf Substrate aufgebracht werden, wie Spritzen, Tauchen usw.

Die KTL-Bäder enthalten die erfindungsgemäßen Amino-Poly(meth)acrylatharze, die in diesem Zusammenhang nachfolgend als Komponente (A) bezeichnet werden, zusammen mit Vernetzungsmitteln, die nachfolgend als Komponente (B) bezeichnet werden, und üblichen Zusatzstoffen, wie dies im einzelnen beschrieben ist in den eingangs genannten Patentschriften betreffend KTL-Bäder, die teilweise nachfolgend genauer erörtert werden. Beispiele für Komponente (B) sind Formaldehyd - Kondensationsharze (Harnstoff-, Melamin-, Benzoguanamin- oder Phenol - Formaldehydharze), blockierte Polyisocyanate und/oder Harze mit umesterungsfähigen Estergruppen unter Zusatz von üblichen Katalysatoren. Um die vergilbungsarmen Eigenschaften des Amino - Poly(meth)acrylatharzes auszunutzen und ET-Bäder mit möglichst hohem pH-Wert zu erhalten, werden blockierte aliphatische oder cycloaliphatische Polyisocyanate oder Harze mit umesterungsfähigen Estergruppen oder ihre Mischungen bevorzugt.

Wie gemäß dem Stand der Technik werden vorzugsweise auf 50 bis 95 Gew.% Amino-Poly(meth)acrylatharz 50 bis 5 Gew.% Vernetzungsmittel eingesetzt, wobei als Vernetzungsmittel die aus dem Stand der Technik (vgl. die eingangs genannten Literaturstellen) bekannten Produkte eingesetzt werden können. Die KTL-Bäder können gegebenenfalls bis zu 30 Gew.% hydroxyfunktionelle Harze (Komponente C) einemulgiert enthalten, die mit den Vernetzungsmitteln reaktionsfähig sind (vgl. z.B. EP—A—0 040 090).

Das Mischungsverhältnis der Komponenten (A) und (B) liegt bevorzugt zwischen 90 zu 10 und 60 zu 40 und wird empirisch aus den optimal erreichbaren anwendungstechnischen Eigenschaften bei der

gegebenen Einbrenntemperatur bestimmt. Eine Kombination mehrerer Vernetzungssysteme kann in bestimmten Fällen von Vorteil sein.

Das Vernetzungsmittel hat vorzugsweise eine mittlere Molmasse ($\overline{Mn}$) von etwa 250 bis 5000, speziell 500 bis 3000. Optimale Eigenschaften werden erhalten, wenn man bezogen auf die Summe der Vernetzungsmittel als Festharz 5 bis 95 Gew.% blockiertes Polyisocyanat mit 95 bis 5 Gew.% umesterungsfähiges Vernetzungsmittel mischt. Besonders bevorzugt wird ein Mischungsverhältnis von blockiertem Polyisocyanat zu umesterungsfähigem Vernetzungsmittel von 1:4 bis 4:1, ganz besonders bevorzugt von 1:2 bis 2:1.

Die blockierten Polyisocyanate werden dadurch hergestellt, daß man ein multifunktionelles Isocyanat mindestens mit einer stöchiometrischen Menge einer monofunktionellen, aktiven Wasserstoff (Zerewitinoff-Reaktion) enthaltenden Verbindung umsetzt, wobei gegebenenfalls basische Katalysatoren wie tert.Amine oder geringe Mengen an Zinnsalzen wie Dibutylzinndilaurat zugegeben werden können. Das erhaltene Reaktionsprodukt setzt sich beim Erwärmen mit den Hydroxylgruppen des Amino - Poly(meth)acrylatharzes um, wobei die Schutzgruppe wieder abgespalten wird. Mittel, die zum Blockieren der Isocyanate geeignet sind, enthalten eine einzige Amin-, Amid-, Lactam-, Thiol- oder Hydroxylgruppe. So haben sich z.B. bewährt aliphatische oder cycloaliphatische Alkohole wie 2-Ethylhexanol, Dialkylaminoalkohole wie Dimethylaminoethanol, Phenole wie Kresol, Oxime wie Methylethylketoxim, Lactame wie ε-Caprolactam, Imide wie Phthalimid, Malonsäure- oder Acetessigester.

Als typische multifunktionelle Isocyanate eignen sich aliphatische, cycloaliphatische und/oder aromatische Polyisocyante mit mindestens zwei Isocyanatgruppen pro Molekül. Beispiele hierfür sind die Isomeren oder Isomerengemische des Toluylendiisocyanat, Toluylentriisocanat, 4,4' - Diphenylmethan - diisocyanat, Diphenyltetraisocyanat und/oder Naphthyltetraisocyanat, sowie ihre Hydrierungsprodukte wie Dicyclohexylmethandiisocyanat. Bevorzugte aliphatische Diisocyanate sind Verbindungen der Formel

$$O=C=N-\left(-CR_2-\right)_r-N=C=O$$

worin r eine ganze Zahl von 3 bis 12, insbesondere 6 bis 8 ist und R, das gleich oder verschieden sein kann, Wasserstoff oder einen niedrigen Alkylrest mit 1 bis 8 C-Atomen, vorzugsweise 1 oder 2 C-Atomen darstellt. Beispiele hierfür sind Hexamethylendiisocyanat, 1,6 - Diisocyanato - 2,2,4 - trimethylhexan, Isophorondiisocyanat. Vinylpolymerisate, die neben Isocyanatgruppen aus z.B. Cyanatoethyl(meth)acrylat als Comonomere noch Alkyl(meth)acrylate und/oder (Alkyl)vinylbenzole enthalten, können auch verwendet werden.

Gemischt aliphatisch/aromatische Verbindungen sind auch geeignet. Als Triisocyanate haben sich die Produkte bewährt, die durch Trimerisation oder Oligomerisation aus Diisocyanaten oder Polisocyanaten und polyfunktionelle OH- oder NH-Gruppen enthaltende Verbindungen dargestellt werden. Hierzu gehört z.B. das Biuret aus dem Hexamethylendiisocyanat und Wasser, das Isocyanurat des Hexamethylendiisocyanats oder das Addukt von Toluylendiisocyanat an Trimethylolpropan. Eine Molekülvergrößerung kann auch durch Reaktion mit tert. Aminogruppen enthaltenden Polyalkoholen wie N - Methyl - diethanolamin, Triethanolamin oder tertiäre Aminogruppen enthaltenden Polyaminen wie 3 - (Methyl) - 3 - (2 - Aminoethyl) - aminopropylamin erfolgen. Um die Löslichkeit zu verbessern, können außerdem kettenabbrechende N - Dialkyl - aminoalkohole wie Dimethyl - aminoethanol oder N,N - Dialkyl - alkylendiamine wie Dimethylaminopropylamin oder N,N - Diethyl - N' - Methyl - 1,3 - ethandiamin eingesetzt werden. Isocyanathaltige Prepolymere auf Basis von Polyglykolethern, Polesterpolyolen, Polyetherpolyolen, Polycaprolactonpolyolen und/oder Polycaprolactampolyolen können ebenfalls mit Vorteil eingesetzt werden. Um nichtvergilbende Einschichtlacke herstellen zu können, werden aliphatische und cycloaliphatische Polyisocyanate bevorzugt.

Ein anderer geeigneter Typ Vernetzungsmittel (Komponente B) ist ein Harz mit endständigen oder seitenabständigen, veresterten Carboxylgruppen, die im neutralen, wäßrigen Medium weitgehend stabil sind, jedoch im basischen Medium des abgeschiedenen Films bei Temperaturen über etwa 140°C mit einem oder mehreren hydroxylgruppenhaltigen Aminopoly(meth)acrylaten (Komponente A) reagieren. Hierbei estern die umesterungsfähigen Estergruppen mit den Hydroxylgruppen des Amino - Poly(meth)-acrylatharzes unter Abspalten der leichter flüchtigen "alkoholischen Schutzgruppen" um. Es sollen im wesentlichen alle endständigen oder seitenständigen Carboxylgruppen mit Alkoholen verestert sein, die unter den Einbrennbedingungen flüchtig sind. Um ein Wandern des Polyesters zur Anode zu vermeiden, ist darauf zu achten, daß er bevorzugt eine Säurezahl unter 20, insbesondere unter 10, besonders bevorzugt unter 3 hat.

Die Reaktivität der Ester wird durch geeigneten chemischen Aufbau gesteigert, z.B. durch Erhöhen der elektrophilen Aktivität der Carboxylgruppe oder durch einen negativen induktiven Effekt auf die Alkoholgruppe. Zur Umesterung befähigt sind primäre, sekundäre und tertiäre Carboxylgruppen. Aufgrund ihrere höheren Reaktivität werden primäre Carboxylgruppen bevorzugt. Die Umesterung wird unterstützt durch die Flüchtigkeit von niederen linearen oder verzweigten primären Monoalkoholen oder durch 1.2-Glykole, die gegebenenfalls durch Ether—oder Estergruppen substituiert sind. Je niedrigermolekular die Alkohole sind, die bei der Umesterung abgespalten werden, desto niedriger sind die Spaltverluste. Methanol oder Ethanol werden besonders bevorzugt. In der Literatur werden eine Reihe von estergruppenhaltigen Vernetzungsmitteln beschrieben, die zur Umesterung mit OH-Gruppen und/oder Umamidierung mit $NH_2$-Gruppen eingesetzt werden, z.B.: In der EP—A—0 040 090 werden Polyurethanester beschrieben, die als umesterungsfähige Gruppen Hydroxylalkylestergruppen, wie Milchsäureester, oder Aminoalkylestergruppen enthalten. Das Vernetzungsmittel weist etwa folgende allgemeine Struktur auf

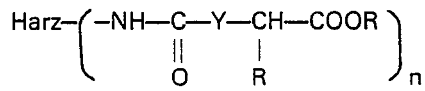

wobei n mindestens 2 ist, bevorzugt ein Wert von 3 bis 10, Y entweder —O— oder —NH— bedeutet und R einen getadkettigen oder verzweigten Alkylrest mit 1 bis 8, bevorzugt 1 oder 2 C-Atomen darstellt.

Ein anderes Vernetzungsmittel kann ein carboxylgruppenhaltiger Polyester sein, dessen Carboxylgruppen durch gegebenenfalls substituierte 1,2-Glykole unter Bildung von β - Hydroxy - verbindungen blockiert sind:

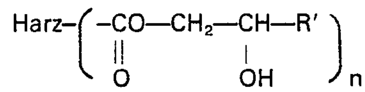

Die eingesetzten 1,2-Glykole sind zweckmäßig durch gesättigte oder ungesättigte Alkyl-, Ether-, Ester-, oder Amidgruppen substituiert, d.h. R' steht für —H, —R, —$CH_2OH$, —$CH_2$—O—R,

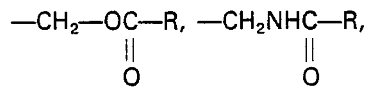

wobei n mindestens 2, bevorzugt einen Wert von 3 bis 10 bedeutet. R ist eine lineare oder verzweigte Alkylgruppe mit 1 bis 15 C-Atomen.

Solche Vernetzungsmittel sind in der EP—A—012 463 und DE—A 31 03 642. beschrieben, z.B. als Reaktionsprodukt von Trimetallithsäureanhydrid mit Cardura E®, dem Glycidylester der Versaticsäure.®.

Andere Vernetzungsmittel werden durch Umesterung von Dicarbonsäurealkylestern mit Polyalkoholen hergestellt. Als besonders reaktiv haben sich Harze folgender allgemeiner Formel erwiesen:

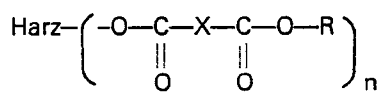

wobei n mindestens 2 ist, bevorzugt einen Wert von 3 bis 10, X eine —$CH_2$—, —$CH_2$—$CH_2$— oder —CH=CH— Gruppe und R einen geradkettigen oder verzweigten Alkylrest mit 1 bis 8, bevorzugt 1 oder 2 C-Atomen darstellt. Im einfachsten Fall ist dieses Vernetzungsmittel ein Reaktionsproukt aus Trimethylolpropan und Malonsäuredimethylester, wie es in der EP—A—082 291 beschrieben ist.

Andere zur Umesterung befähigte Vernetzungsmittel werden durch Michael-Addition von Acetessigsäurealkylester oder Malonsäuredialkylester an Harze mit Doppelbindungen, die über CO-Gruppen aktiviert werden, erhalten:

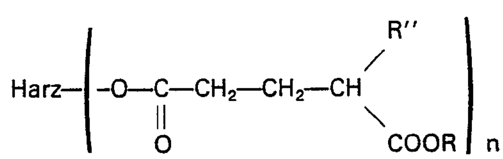

wobei R'' für —COOR, —CO—R oder —CN steht und n mindestens 2, bevorzugt einen Wert von 3 bis 10 ist. Diese Harze werden im einfachsten Fall aus Butandioldiacrylat und Acetessigester oder aus dem Toluylendiisocyanat - hydroxyalkyl(meth)acrylat - Addukt und Malonsäuredialkylester, wie in der DE—A—33 15 469 beschrieben, hergestellt. Die Machael-Addition kann stöchiometrisch durchgeführt werden oder auch unter Einsatz von überschüssigen Doppelbindungen.

In der DE—A—33 22 766 werden Vernetzungsmittel beschrieben, die Carbalkoxymethylestergruppen enthalten. Vernetzungsmittel dieser Art weisen etwa folgende allgemeine Formel auf

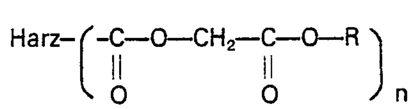

wobei n mindestens 2 und R ein Alkylrest sind.

Die Vernetzung von OH-gruppenhaltigen Amino-Poly(meth)acrylatharzen mit blockierten Polyisocyanaten kann gegebenenfalls durch Zusatz von 0.01 bis 2 Gew.%, speziell 0.5 bis 1 Gew.%, bezogen auf Festharz der Komponenten (A) und (B), stark basische tertiäre Amine und/oder aktive Metallverbindungen beschleunigt werden. Eine besondere, manchmal synergistische Wirkung wird erreicht durch die Kombination von basischem Medium des abgeschiedenen Amino - Poly(meth)acrylatharz und den Metallsalzen von Wismut, Blei, Cobalt, Eisen, Antimon und/oder Zinn-II und IV. Besonders bevorzugt werden Katalysatoren wie Eisen - III - acetylacetonat, Dibutylzinn - dilaurat, Tri - n - butyl - zinn - oxid, Dibutyl - zinn - dioctyl - maleat, Zinn-octoat, Zinn-oleat, Tetrabutyltitanat und/oder Cobalt - 2 - ethylhexoat.

Zur Katalyse des Umesterungsverfahrens ist im allgemeinen ein höherer Katalysatorgehalt notwendig. Zweckmäßig werden 0.1 bis 10 Gew.%, bevorzugt 2 bis 6 Gew.%, bezogen auf die Komponenten (A) und (B), Metalloxide, Metallsalze oder Metallkomplexe von ein- oder mehrwertigen Metallen verwendet. Sie werden im allgemeinen nach Salzbildung mit 2-Ethylhexansäure oder Naphthensäure in aliphatischen und aromatischen Kohlenwasserstoffen gelöst. Diese Lösungen werden in das Elektrophoresebad einemulgiert. Eine andere Möglichkeit besteht in der Komplexbildung, der Metalle mit Acetylacetonat, Dicyclopentadien, 8 - Oxy - hydrochinolin, 4 - Methylcatechin und/oder 2,5 - Dimercapto - 1,3,4 - thiodiazol.

Beispiele für geeignete Katalysatoren sind Antimontrioxid, Cobaltnaphthenat, Bleioctoat, Eisen - acetylacetonat, das Reaktionsprodukt aus Zinkoxid+8 - Oxyhydrochinolin, Thallium - dicyclopentadien oder Triethanolamin - titanat. Bevorzugt werden Bleioctoat und das Zink - Oxyhydrochinolat. Die Metallkatalysatoren können auch in fein verteilter Form als Pigmente wie Bleisilikat eindispergiert werden. Wasserverdünnbare Metallsalze sind ebenfalls als Umesterungskatalysatoren geeignet, wenn das Metall als Verbindung oder Komplex in fein verteilter Form mit dem Lack abgeschieden wird. Bevorzugt sind Katalysatoren, die im ET-Bad schlecht löslich sind und sich nach der elektrophoretischen Abscheidung im abgeschiedenen Film beim Einbrennen gleichmäßig verteilen.

Die Komponenten (A) und (B) können kalt gemischt oder auch bei erhöhter Temperatur präkondensiert werden. Dabei reagieren die Komponenten (A) und (B) in gewissem Umfang miteinander, ohne daß das Gemisch seine Hitzehärtbarkeit und die Eigenschaft, durch Portonisieren mit Säuren wasserlöslich gemacht werden zu können, verliert.

Zum Ausbalancieren der anwendungstechnischen Eigenschaften ist es zweckmäßig, daß das kathodisch abscheidbare Amino - Poly(meth)acrylatharz außer dem Vernetzungsmittel noch zusätzlich bis zu 30 Gew.%, bevorzugt 5 bis 20 Gew.% eines hydroxyfunktionellen Harzes (Komponente C) enthält, das mit den blockierten Polyisocyanaten und den umesterungsfähigen Vernetzungsmitteln reagiert. So können zum Steigern des Umgriffs hydroxyfunktionelle Harze mit einer OH-Zahl von 30 bis 500, speziell 50 bis 300 und einer mittleren Molmasse ($\overline{Mn}$) von 300 bis 5000, speziell 500 bis 3000 eingesetzt werden. Beispiele für solche Harze sind Styrol - Allylalkohol - Copolymere, OH-gruppenhaltige (Meth)acrylcopolymere, Caprolactonpolyole, Caprolactampolyole, Urethanpolyole, OH-gruppenhaltige Polyether und Polyester. So werden OH-gruppenhaltige Copolymere durch Copolymerisation von ungesättigten, hydroxylgruppenhaltigen Monomeren mit anderen ethylenisch ungesättigten Monomeren, die keine weiteren reaktiven functionellen Gruppen enthalten, wie schon oben beschrieben, hergestellt. Als Polyetherpolyole werden Verbindungen der allgemeinen Formel

$$H\!-\!\!\left[O(CHR)_n\right]_m\!-\!OH$$

verstanden, in der R=H oder ein niedrigerer, gegebenenfalls mit verschiedenen Substituenten versehener Alkylrest, n=2 bis 6 und m=5 bis 50 ist. Beispiele sind Polyoxytetramethylenglykole. Polyesterpolyole kann man durch Polykondensation von Polycarbonsäuren oder ihren Anhydriden mit organischen Polyalkoholen oder durch Umsetzung eines ε-Lactons mit Polyalkoholen erhalten. Üblicherweise sind die Polycarbonsäuren aliphatische, cycloaliphatische oder aromatische Dicarbonsäuren und die Polyalkohole lineare oder verzweigte aliphatische oder cycloaliphatische Polyole. Beispiele sind verzweigte Polyester aus Adipinsäure, Phthalsäureanhydrid, Trimethylolpropan und Butylenglykol - 1,4 oder das Reaktionsprodukt von ε-Caprolacton mit Trimethylolpropan. Polyurethanpolyole werden durch Umsetzen von aliphatischen, cycloaliphatischen oder aromatischen Polyisocyanaten, bevorzugt Diisocyanaten, mit aliphatischen oder cycloaliphatischen Polalkoholen, Polyetherpolyolen und/oder Polyesterpolyolen erhalten. Die verschiedenen hydroxyfunktionellen Harze können auch als Gemische verwendet werden oder segmentartig aufgebaut sein. Beispiele hierfür sind die Reaktionsprodukte von 2Mol Polyglykolether mit 1 Mol hydroxylgruppenhaltigem Polyester oder 2 Mol Polyglykolether mit 2 Mol Dicarbonsäure und 1 Mol hydroxylgruppenhaltigem Polyurethan.

Die Harze enthalten eine solche Menge an polaren Gruppen, bevorzugt primären OH-Gruppen, daß sie einwandfrei in dem neutralisierten, basischen Amino - Poly(meth)acrylatharz (Komponente A) einemulgierbar sind. Zum Erreichen einer besseren Verträglichkeit und Wasserverdünnbarkeit ist der Einbau einer geringen Aminzahl unter 30, besonders unter 20, möglich. Die Harze werden bevorzugt so aufgebaut, daß die Komponenten beim Einbrennen nicht vergilben. Der Molekulargewichtsbereich wird so ausgewählt, daß sie nicht mehr flüchtig sind, jedoch durch eine verbesserte Fließfähigkeit eine gute Filmbildung erzielen. Eine eventuell erfolgende Präkondensation kann in beliebiger Reihenfolge erfolgen, also entweder Komponenten (A) mit (B) oder (B) mit (C) oder (A) mit (B) und (C).

Durch Protonisieren mit Säuren wird das kationische Amino - Poly(meth)acrylatharz in an sich bekannter Weise wasserverdünnbar gemacht. Beispiele für Säuren sind Ameisensäure, Essigsäure, Propionsäure, Milchsäure, Zitronensäure, Malonsäure, Acrylsäure, Phosphorsäure oder Alkylphosphorsäure. Monobasische niedrigmolekulare organische Carbonsäure werden bevorzugt. Es sohle bevorzugt mindestens so viel Säure zugegeben werden, daß eine stabile Emulgierung des kationischen Basisharzes erfolgt. Ein Überschuß an Säure, d.h. ein Neutralisationsgrad über 100%, ist vorzugsweise zu vermeiden. Der MEQ-Wert (Milliäquivalent Säure pro 100 g Festharz) liegt im allgemeinen zwischen 20 und 80. Es wird ein möglichst niedriger MEQ-Wert angestrebt, um ein möglichst hohes Abscheideäquivalent zu erhalten.

Das Überzugsmittel kann zusätzlich übliche lacktechnische Zusatzstoffe wie Antikratermittel, Verlaufmittel, Antischaummittel usw. enthalten. Naturgemäß sind solche Zusatzstoffe auszuwählen, die mit Wasser bei saurem bis neutralen pH-Wert keine störenden Reaktionen eingehen, keine störenden Fremdionen einschleppen und bei längerem Stehen nicht in nichtaufrührbarer Form ausfallen, d.h. auch nach längerem Stehen muß sich das Überzugsmittel durch Rühren in eine brauchbare Dispersion überführen lassen.

Das Überzugsmittel kann zum Senken der Viskosität, zum Steuern der Abscheidespannung und zum Verbessern der Haftung und des Verlaufs bis zu ungefähr 20 Gew.% organische Lösemittel enthalten. Es wird ein möglichst niedriger Gehalt an organischen Lösemitteln angestrebt, besonders unter 15 Gew.%, ganz besonders unter 10 Gew.%. Als Lösemittel dienen Alkohole, Glykolether, Ketoalkohole, gegebenenfalls unter Zusatz von aliphatischen und/oder aromatischen Kohlenwasserstoffen verschiedener Kettenlänge. Bei der Auswahl muß berücksichtigt werden, daß das Vernetzungsmittel nicht wasserlöslich ist und Anteile von wasserunlöslichen Lösemitteln gegebenenfalls den Dispergiervorgang erleichtern und stabilisieren können. Mit steigendem Lösemittelgehalt verschlechtert sich der Umgriff und die abgeschiedene Schichtdicke erhöht sich und es können Überbeschichtungen auftreten. Wasserunlösliche Lösemittel wirken hierbei stärker als wasserlösliche. Die eventuell für die Herstellung der Harze notwendigen aprotischen Lösemittel können gegebenenfalls nach der Herstellung des Produktes gegen andere Lösemittel durch Abdestillieren ausgetauscht werden.

Der Feststoffgehalt des Überzugsmittels gemäß der Erfindung beträgt nach Verdünnen mit Wasser zweckmäßig 5 bis 50 Gew.%. Beim Einstellen des Lackes auf einen höheren Festkörper von 25 bis 50 Gew.%, bevorzugt 30 bis 45 Gew.%, werden wasserverdünnbare Einbrennlacke erhalten, die durch Tauchen, Spritzen, Walzen usw. auf das zu lackierende Objekt aufgebracht werden können. Verdünnt man dagegen auf einen Festkörper von 5 bis 30 Gew.%, vorzugsweise 10 bis 20 Gew.%, so ist der Lack für die elektrophoretische Abscheidung geeignet. Das Bad wird ständig gerührt, um an der Kathodenoberfläche eine gleichmäßige Temperatur aufrechtzuerhalten und ein Absetzen der unlöslichen Bestandteile der Dispersion, z.B. der Pigment zu verhindern. Der pH-Wert des Lackes liegt beispielsweise zwischen 4.0 und 7.5, vorzugsweise zwischen 5.0 und 6.5. Liegt der pH-Wert zu niedrig, so ist mit einem Angriff der Säure auf das Eisen von Becken, Rohrleitungen und Pumpen zu rechnen. Die elektrophoretische Abscheidung erfolgt zweckmäßig frühestens 24 Stunden nach Herstellen des Bades. Während dieser Zeit wird zweckmäßig kontinuierlich gerührt, um eine gleichmäßige Verteilung zu erhalten. Als Anode werden elektrisch leitfähigt, nicht korrodierende Elektroden, z.B. aus nichtrostendem Stahl oder Graphit verwendet. Der an der Kathode zu beschichtende Gegenstand und die Anode werden, wie für die elektrophoretische Abscheidung bekannt, in ein wäßriges Bad eingetaucht. Es können alle metallisch leitenden Werkstücke beschichtet werden, wie Kupfer, Aluminium, Zinn, Zink, Eisen und Legierungen dieser Metalle. Während des Abscheidens wird das Bad bei Temperaturen von zweckmäßig etwa 15 bis 35°C gehalten. Festkörper, Abscheidungstemperatur und -zeit, sowie Spannung werden so gewählt, daß die gewünschte Schichtstärke nach Abspülen mit Wasser und/oder Ultrafiltrat und Einbrennen der Temperaturen von etwa 150 bis 230°C erhalten wird. So steigt z.B. die Schichtstärke mit zunehmender Beschichtungszeit und Abscheidespannung. Beim Anlegen eines elektrischen Stromes mit einer Spannung von zweckmäßig 50 bis 500 Volt zwischen metallisch leitendem Werkstück und einer Gegenelektrode wird das wasserverdünnbare Basisharz an der Kathode koaguliert. Es transportiert hierbei das wasserunlösliche Vernetzungsmittel, Pigmente, Katalysatoren usw. mit. Hierbei kann sich das Verhältnis von Pigment zum Kunstharz-Bindemittel im abgeschiedenen Film zugunsten des Pigmentes verschieben. Gleichzieitig werden Wasser und die zur Neutralisation verwendete Säure im Bad angereichert. Zum Nachfüllen müssen daher konzentrierte Lacke verwendet werden, die diese Verschiebung durch geänderte Mengenverhältnisse ausgleichen. Diese Korrektur kann auch durch geeignete apparative Einrichtungen, z.B. Elektrodialyseverfahren oder Ultrafiltration erfolgen.

Das konzentrierte, mit Wasser zu verdünnende Bindemittel gemäß der Erfindung mit z.B. einem Festkörper von etwa 85 bis 60 Gew.% kann in üblicher Weise mit Kugelmühle, Dreiwalze oder Perlmühle pigmentiert werden. Hierzu können übliche Pigmente, Füllstoffe, Korrosionsschutz-Inhibitoren und Lackhilfsmittel verwendet werden, solange sie mit Wasser im sauren bis neutralen Medium keine störenden Reaktionen eingehen, keine wasserlöslichen Fremdionen einschleppen und beim Altern nicht so ausfallen, daß sie nicht wieder aufgerührt werden können. Die Lacke sind besonders für die Elektrotauchlackierung von Metallen geeignet und geben nach Einbrennen von bevorzugt 15 bis 45 Minuten bei 160 bis 190°C glatte, glänzende, nichtvergilbende Filmemit guter Alterungsstabilität, Haftfestigkeit, Härte und Elastizität, sowie Korrosionsbeständigkeit. Das Pigment - Bindemittelverhältnis ist abhängig von Dispergierfähigkeit und Viskosität des Bindemittels und liegt im allgemeinen zwischen 0.1:1 und 1.5:1.

Bevorzugt sind solche Pigmente und damit ET-Bäder, die diese enthalten, die die endgültige Farbgebung des beschichteten Gegenstandes und damit dessen Endlackierung ergeben. Besonders vorteilhaft ist die Erfindung für helle, insbesondere weiße Pigmente wie Titandioxid, weil der abgeschiedene Lack beim Einbrennen seinen Farbton im wesentlichen nicht verändert und somit als bewitterungsstabile Einschichtlackierung verwendet werden kann. Damit wird es möglich durch geringen Zusatz von farbigen Pigmenten zum Titandioxid Pastellfarbtöne mit oder ohne Metalleffekt herzustellen, die ihren Farbton behalten. Setzt man den Lack als Grundierung für ein Zwischichtsystem ein, so entsteht ein Vorteil dadurch, daß der Decklack bei höheren Temperaturen wie 10 bis 60°C, bevorzugt 20 bis 40°C höher als bei der Grundierung eingebrannt werden kann, ohne daß Farbtonveränderungen von der Grundierung auf den Decklack durchschlagen.

Vergleichspeispiel 1 (nach EP—A—0 082 291, Beispiel A 4)

30 g Azobisisobutyronitril werden in 600 g Isopropanol und Erwärmen auf 50°C gelöst. Zur klaren Lösung wird bei Rückflußtemperatur (ansteigend von 82 bis 86°C) ein Monomerengemisch bestehend aus 300 g Glycidylmethacrylat (2.027 Mol), 300 G Hydroxyethylmethacrylat, 300 g Methylmethacrylat und 600 g Ethyl-hexylacrylat, in dem 30 g Azobisisobutylronitril·gelöst sind, während 2 Stunden gleichmäßig zugegeben. Es wird weitere 3 Stunden bei Rückflußtemperatur (ca. 90°C) gerührt. Anschließend wird schnell eine homogene Lösung von 240 g Diisopropanolamin (1.805 Mol) in 300 g Ethylenglykol - monobutylether zugegeben und weitere 2 Stunden bei 90°C nachgerührt. Verdünnen mit 255 g Ethylenglykol-monobutylether.

| | |
|---|---|
| Festkörpergehalt: | 63 Gew.% (30 min bei 150°C erwärmt) |
| Aminzahl: | 55 mg KOH/g Festharz |
| Viskosität: | 3.7 Pas (nach Verdünnen mit Ethylenglykol-monobutylether auf 60 Gew.% bei 25°C) |

Es wurde beim Altern des Harzes ein Viskositätsanstieg gefunden:
nach 1 Woche auf 4.1 Pas
nach 4 Wochen auf 5.4 Pas
Ansetzen eines Abscheidebades nach folgender Rezeptur:
476 g Vergleichsharz 1
107 g Vernetzungsmittel B 1
7 g Octa-Soligen-Blei® (72%ig)
8.3 g Ameisensäure (85%ig)
werden nacheinander zusammengerührt und langsam mit vollentsalztem Wasser auf 2 Liter verdünnt.

| | |
|---|---|
| Festkörpergehalt: | 14.5 Gew.% (30 min 180°C) |
| pH-Wert: | 5.5 |
| Badleitfähigkeit: | 1603 $\mu Scm^{-1}$ |
| MEQ-Wert: | 42 |

Der Film koaguliert bei 75 Volt so lose, daß er beim Abspülen mit Wasser teilweise vom Blech abgelöst wird. Eine Beschichtung ist daher nicht möglich. Die Komponente A 4 ist in der EP 82 291 in keinem Abscheidungsbeispiel erwähnt.

Vergleichsbeispiel 2

Herstellungsverfahren wie Vergleichsbeispiel 1, aber unter Verwendung folgender Mengen:
26.0 g Azobisisobutyronitril
520 g Isopropanol
260 g Glycidylmethacrylat (1.757 Mol)
260 g Hydroxyethylmethacrylat
260 g Methylmethacrylat
520 g Ethyl-hexylacrylat
26 g Azobisisobutyronitril
116.7 g Monomethyl-ethanolamin (1.556 Mol)
260 g Ethylenglykol-monobutylether
195 g Ethylenglykol-monobutylether
Der Ansatz geliert nach Zusatz des stärker basischen Amins.

Beim äquivalenten Austausch von Monomethyl-ethanolamin gegen Diethylamin (113.6 g) tritt ebenfalls eine Gelierung des Ansatzes auf.

Vergleichsbeispiel 3 (nach DE—A—23 25 117, Beispiel 4)

640 g Isopropanol und 32 g Azobisisobutyronitril werden in einem mit Rührer, Rückflußkühler, Tropftrichter und Thermometer versehenen Reaktor gegeben und erhitzt.

Nach Einsetzen des Rückflusses wird ein Gemisch von 480 g Glycidylmethacrylat (3.24 Mol), 320 g

Styrol, 160 g Methylmethacrylat, 640 g Ethylacrylat und 32 g Azobisisobutyronitril innerhalb von 2 Stunden gleichmäßig zugesetzt. Anschließend wird 3 Stunden unter Rückfluß (ca. 85°C) erhitzt. Diese Copolymerlösung hat einen Festkörpergehalt von 72.8 Gew.% (nach 30 Minuten Erwärmen auf 150°C) und eine Viskosität von 746 mPas (nach Verdünnen auf 60 Gew.% mit Isopropanol bei 25°C). Danach wird eine Lösung von 62.4 g Monomethylethanolamin (0.83 Mol) in 128 g Isopropanol schnell zugegeben. Beim Erwärmen auf Rückflußtemperatur gelierte der Ansatz.

Amino-Poly(meth)acrylatharz A1

In einem 4 Liter- Planschilffkolben mit Rührwerk, Thermometer, Rückflußkühler werden unter Inertgas 938 g Ethylenglykol - monobutylether auf 115°C erwärmt. Innerhalb von 3 Stunden wird bei dieser Temperatur ein Gemisch von 268 g Hydroxyethylacrylat, 306 g Glycidylmethacrylat, 952 g n-Butylacrylat, 341 g n-Butylmethacrylat und 21.6 tert. - Butylperoxy - 2 - ethylhexoat zugegeben. Nach 1 Stunden Rühren werden zum Vervollständigen der Reaktion 6.6 g und nach einer weiteren Stunde 4.5 g tert. - Butylperoxy - 2 - ethylhexoat zugegeben.

Nach weiteren 3 Stunden bei 115°C wird abgekühlt und bei einem Festkörper-Gehalt von 67.5 Gew.% (nach 30 min Erwärmen auf 150°C) eine Viskosität von 500 mPas gefunden (gemessen nach Verdünnen auf 60 Gew.% mit Ethylenglykol - monobutylether bei 25°C). Das Epoxyäquivalentgewicht der Lösung beträgt 1400. Nach Abkühlen auf 30°C wird ein kaltes Gemisch aus 108 g Isopropanol und 168 g Monomethylethanolamin auf einmal zugegeben (1.04 Mol Amin auf 1.00 Mol Epoxid). Durch Kühlen wird ein Temperaturanstieg auf über 40°C verhindert. Nach Abklingen der exothermen Reaktion, wird auf 60°C erwärmt und diese Temperatur 3 Stunden gehalten. Anschließend wird das überschüssige Amin bei ca. 100°C mit Wasserdampf abdestilliert.

Endwerte:

| | |
|---|---|
| Festkörpergehalt: | 76.2 Gew.% (30 min 150°C) |
| Viskosität: | 3.2 Pas (60%ig in Ethylenglykol-monobutylether) |
| Aminzahl: | 54 mg KOH/g Festharz |
| Hydroxylzahl (berechnet): | 178 mg KOH/g Festharz |

Beim Lagern des Ansatzes trat nach 2 Monaten kein wesentlicher Viskositätsanstieg auf.

Amino-Poly(meth)acrylatharz A2

725 g Ethylenglykol-monobutylether werden unter Inertgas auf 110°C unter Einschalten eines Rückflußkühlers erwärmt. Innerhalb von 3 Stunden wird eine Mischung aus

192 g Hydroxyethylacrylat, 137 g Butandiol-monoacrylat,
228 g Glycidyl-methacrylat, 364 g 2-Ethyl-hexylacrylat,
439 g Butylmethacrylat, 438 g Methylmethacrylat, 90 g Styrol und 44 g Azo-bis-isobutyronitril zugegeben.

Danach wird 1 Stunde bei 110°C gehalten, 6 g Azo - bis - isobutyronitril zugegeben und dieser Vorgang nach einer weiteren Stunde wiederholt. Nach 3 Stunden 110°C wird ein Festkörpergehalt von 72.2 Gew.% und nach Verdünnen auf 60 Gew.% mit Ethylenglykol - monobutylether eine Viskosität von 2.14 Pas bei 25°C gemessen. Nach Abkühlen auf 50°C werden ein Gemisch von 129 g Diethylamin und 201 g Isopropanol schnell zugegeben (1.10 Mol Amin auf 1.00 Mol Epoxid). Nach 30 Minuten wird auf 65°C erwärmt, dann 1 Stunde gehalten, anschließend auf 105°C aufgeheizt und dann 2 Stunden gehalten. Nach Abkühlen auf 80°C wird unter Vakuum Isopropanol und Aminüberschuß abdestilliert, dann die Aminreste durch Wasserdampfdestillation entfernt. Einstellen des Festkörpergehaltes mit Ethylenglykol - monobutylether auf 78 Gew.%.

Endwerte:

| | |
|---|---|
| Festkörpergehalt: | 78.7 Gew.% (30 min 150°C) |
| Aminzahl: | 45 mg KOH/g Festharz |
| Viskosität: | 3.44 Pas (nach Verdünnen auf 60 Gew.% mit Ethylenglykol-monobutylether) |

Das Harz ist beim Lagern viskositätsstabil und gibt nach Kombination mit Vernetzungsmitteln (vgl. Biespiel 2 und 3) glatte Oberflächen mit gleichmäßiger Schichtdickenverteilung.

Vernetzungsmittel B1 (Polyester)

Gemäß EP 12 463, S. 17, Beispiel II(a), werden 781 g Trimellithsäureanhydrid bei 100°C in 1976 g Ethylenglykol - monobutylether gelöst und mit 2236 g Cardura E 10®, dem Glycidylester der Versaticsäure® sowie 7 g Benzyldimethylamin vermischt. Die Mischung wird auf 120°C unter Rühren erwärmt und gehalten, bis die Säurezahl unter 1.1 mg KOH/g gesunken ist. Der Polyester hat die Kennzahlen:

| | |
|---|---|
| Festkörpergehalt: | 70.7 Gew.% (60 min 125°C) |
| Säurezahl: | 0.7 mg KOH/g Festharz |
| Epoxid-Äquivalentgewicht: | >10 000 |

Vernetzungsmittel B2 (blockiertes Polyisocyanat)

1944 g Tris-(isocyanatohexyl)-biuret (=Desmodur N-100®) werden unter Inertgas in einen Reaktionskolben gefüllt und unter langsamen Rühren auf 80°C erwärmt. 1256 g ε-Caprolactam werden gleichmäßig verteilt über 3 Stunden so zugegeben, daß die Reaktionstemperatur 100°C nicht übersteigt. Dann werden 0.4 G Dibutylzinndilaurat zugegeben und abgewartet bis die Reaktionstemperatur von allein bis auf 80°C abfällt. Es wird bei dieser Temperatur gehalten bis der Isocyanatgehalt unter 0.3% abgesunken ist. Verdünnen mit Ethylenglykol - monobutylether auf einen Festkörpergehalt von 65 Gew.%.

Vernetzungsmittel B3 (blockiertes Polyisocyanat)

666 g Isophorondiisocyanat und 134 g Trimethylolpropan werden mit 431 g Ethylglykolacetat gemischt und unter Rühren und Luftfeuchtigkeitsausschluß innerhalb einer Stunde auf 60°C erwärmt. Das zunächst unlösliche und feste Trimethylolpropan schmilzt hierbei und reagiert langsam innerhalb einer weiteren Stunde, wobei die Temperatur auf 90°C erhöht wird. Zum Vervollständigen der Reaktion beläßt man noch weitere 3 Stunden bei 90°C und erhält ein NCO - Äquivalentgewicht von 410. Dann werden 366 g ε-Caprolactam in 3 Stunden so langsam zugegeben, daß die Reaktionstemperatur von 100°C nicht überschritten wird. Danach wird solange bei dieser Temperatur gehalten, bis die NCO-Zahl unter 0.1% abgesunken ist. Man destilliert das Lösemittel unter Vakuum weitgehend ab und verdünnt mit Ethylenglykol - monobutylether auf 80 Gew.%.

OH-gruppenhaltiges Polymerisatharz C1

In 667 g sekundärem Butanol werden bei etwa 100°C in 3 Stunden ein Gemisch von 636 g n-Butylacrylat, 344 g Hydroxyethylacrylat und 10 g Azo - bis - isobutyronitril eingetropft und anschließend in 4 Stunden unter Zusatz von 2 mal je 3 ml tertiär - Butylperoctoat auspolymerisert.

Festkörper: 59.2 Gew.%, gemessen durch 40 Minuten langes Erwärmen auf 180°C im Umluftofen.

OH-gruppenhaltiges Polymerisatharz C2

1050 g Ethylenglykol-monobutylether werden auf 80°C erhitzt und 1950 g eines käuflich erworbenen Allylalkohol - Styrol - Copolymeren mit einer mittleren Molmasse von 2400 und einem OH - Äquivalentgewicht von etwa 300 darin aufgelöst.

Festkörper: 65.1 Gew.%. (40 min 180°C)

Beispiel 1

315 g des Amino-Poly(meth)acrylatharzes A1 werden mit 80 g Vernetzungsmittel B 1, 6.0 g Polymerisatharz C1, 5.8 g Octa-Soligen-Blei® (72%ig) und 4.95 g Ameisensäure (85%ig) gemischt und auf 2 Liter mit entionsiertem Wasser langsam unter Rühren verdünnt.

| | |
|---|---|
| Festkörpergehalt: | ca. 15 Gew.% |
| pH-Wert: | 6.1 |
| Badleitfähigkeit: | 1467 $\mu Scm^{-1}$ |
| MEQ-Wert: | ca 30 |

Bei 25°C Badtemperatur wurde 2 Minuten bei 120 Volt ein Film auf zinkphosphatierten Blechen (Bonder 132) abgeschieden. Nach Einbrennen bei 25 Minuten 180°C entstand ein 16 bis 17 µm dicker Trockenfilm, der gegenüber Einwirkung von Methyl-ethylketon unempfindlich war und nicht vergilbte. Die Filmqualität war beim Abscheiden aus frischen und gealterten Bädern gleich und zeigte eine gleichmäßige Oberfläche.

Beispiel 2

In einer Perlmühle werden 196.8 g Amino - Poly(meth)acrylatharz A2, 106.5 g eines nach dem Chlorid-Verfahren hergestelltes, mit Aluminium nachbehandeltes Rutil-Pigment, 12 g Polymerisatharz C2, 0.86 g Di - n - butyl - zinn - dilaurat und 65 g Ethylenglykol - monoethylether bei Temperaturen unter 55°C 35 Minuten lang angerieben. Danach werden 59.6 g Vernetzer B2 zugegeben und unter dem Dissolver vermischt, wobei nach und nach 10.5 g Ameisensäure (50%ig) zugegeben werden. Unter gutem Rühren auf 2 Liter mit vollentsalztem Wasser vorsichtig verdünnen.

| | |
|---|---|
| pH-Wert: | 5.3 |
| Badleitfähigkeit: | 1510 $\mu Scm^{-1}$ |
| MEQ-Wert: | 38 |
| Festkörpergehalt: | 15.1 Gew.% |

Auf zinkphosphatierten Stahlblechen (Bonder 132) wird bei einer Badtemperatur von 28°C 2 Minuten mit 220 Volt beschichtet. Nach dem Abspülen mit Wasser und 25 Minuten langem Einbrennen bei 180°C ergibt sich eine Trockenfilmstärke von 17 bis 18 µm. Es entsteht ein glatter, weißer Film mit einwandfreier

Oberfläche, gutem Korrosionsschutz und hoher Detergentienfestigkeit, der beim Überbrennen (30 Minuten bei 200°C) nicht vergilbt. Nach wochenlangem Stehen des Bades kann ohne Schwierigkeiten ein Film mit der gleichen Oberflächenqualität hergestellt werden.

Beispiel 3

Herstellungsverfahren wie Beispiel 2, aber unter Einsatz folgender Mengen:

196.8 g Amino-Poly(meth)acrylatharz A2
106.5 g Rutil-Pigment
10.9 g Octa-Soligen Blei (72%ig)®
48.4 g Vernetzungsmittel B1
66.1 g Ethylenglykol-monoethylether
10.5 g Ameisensäure (50%ig)

Es werden folgende Badkennwerte gemessen:

| | |
|---|---|
| pH-Wert: | 5.2 |
| Badleitfähigkeit: | 1630 $\mu Scm^{-1}$ |
| MEQ-Wert: | 42 |
| Festkörpergehalt: | 14.7 Gew.% |

Beschichtungsbedingungen:

| | |
|---|---|
| Badtemperatur: | 28°C |
| Beschichtungszeit: | 2 Minuten |
| Abscheidespannung: | 210 Volt |
| Trockenfilmstärke: | 17 bis 18 µm |

Es ent steht ein glatter weißer Film mit einwandfreier Oberfläche und gutem Umgriff, der beim Überbrennen (30 Minuten bei 200°C) nicht vergilbt. Nach wochenlangem Stehen des Bades kann ohne Schwierigkeiten ein Film mit der gleichen Oberflächenqualität hergestellt werden.

Beispiel 4

Herstellungsverfahren wie Beispiel 2, aber unter Einsatz folgender Mengen:

206.5 g Amino-Poly(meth)acrylatharz A2
106.4 g Rutil-Pigment
6.4 g Octa-Soligen Blei (72%ig)®
0.4 g Dibutyl-zinn-dilaurat
54.8 g Ethylenglykol-monobutylether
24.2 g Vernetzungsmittel B1
29.8 g Vernetzungsmittel B3
10.5 g Ameisensäure (50%ig)

Es werden folgende Badkennwerte gemessen:

| | |
|---|---|
| pH-Wert: | 5.2 |
| Badleitfähigkeit: | 1730 $\mu Scm^{-1}$ |
| MEQ-Wert: | 51 |
| Festkörpergehalt: | 14.2 Gew.% |

Beschichtungsbedingungen:

| | |
|---|---|
| Badtemperatur: | 28°C |
| Beschichtungszeit: | 2 Minuten |
| Abscheidespannung: | 150 Volt |
| Trockenfilmstärke: | 17 µm |

Es entsteht ein alterungsstabiler glatter, weißer Film mit einwandfreier Oberfläche, der beim Überbrennen nicht vergilbt.

**Patentansprüche**

1. Verfahren zur Herstellung eines fremdvernetzenden, epoxidgruppenfreien Amino-polyacrylat- und/oder -methacrylatharzes für wasserverdünnbare Lacke mit einer Aminzahl von 30 bis 150 und einer Hydroxylzahl von 30 bis 450, durch Umsetzung eines Epoxidgruppen enthaltenden durch Lösungspolymerisation erhaltenen Poly(meth)acrylharzes mit einer mittleren Molmasse ($\overline{Mn}$) von 600 bis 10000 und einem Epoxyäquivalentgewicht von 300 bis 4000 mit primären und/oder sekundären Monoaminen und/oder Aminoalkoholen, dadurch gekennzeichnet, daß mit einem Überschuß an primären und/oder

sekundären Monoaminen und/oder Aminoalkoholen, die niedriger sieden oder wasserdampfflüchtiger als das Lösungsmittel sind, alle freien Epoxidgruppen umgesetzt und die nicht umgesetzten überschüssigen Aminverbindungen abdestilliert werden.

2. Verfahren nach Anspruch 1, dadurch gekennzeichnet, daß auf ein Äquivalent Epoxidgruppen mehr als 1.01 Äquivalente Aminogruppen eingesetzt werden.

3. Verfahren nach Anspruch 1, dadurch gekennzeichnet, daß auf ein Äquivalent Epoxidgruppen mehr als 1.04 Äquivalente Aminogruppen eingesetzt werden.

4. Verfahren nach Anspruch 1, dadurch gekennzeichnet, daß auf ein Äquivalent Epoxidgruppen mehr als 1.06 Äquivalente Aminogruppen eingesetzte werden.

5. Verfahren nach einem oder mehreren der Ansprüche 1 bis 4, dadurch gekennzeichnet, daß die Aminoverbindungen mit Hilfe eines Dünnschichtverdampfers abdestilliert werden.

6. Verfahren nach einem oder mehreren der Ansprüche 1 bis 4, dadurch gekennzeichnet, daß die Aminoverbindungen mit Wasserdampf abdestilliert werden.

7. Fremdvernetzendes, epoxidgruppenfreies Amino-polyacrylat- und/oder -methacrylatharz für wasserverdünnbare Lacke, mit einer Aminzahl von 30 bis 150 und einer Hydroxylzahl von 30 bis 450, erhältlich nach einem der Ansprüche 1 bis 6.

8. Verwendung von fremdvernetzenden, epoxidgruppenfreien Amino-polyacrylat- und/oder -methacrylatharzen gemäß Anspruch 6 in Kombination mit üblichen Vernetzungsmitteln als Bindemittel für KTL-Bäder.

9. Kathodisch abscheidbares wäßriges Elektrotauchblack - Überzugsmittel (KTL-Bad), des ein Kunstharzbindemittel mit Aminogruppen, welches durch Portonisieren mit Säuren wasserlöslich gemacht werden kann, in Kombination mit Vernetzungsmitteln und gegebenenfalls hydroxyfunktionellen Harzen enthält und das gegebenenfalls Pigmente, Füllstoffe, Korrosionsschutzinhibitoren, Lackhilfsmittel, Katalysatoren und in einer Menge von bis zu 20 Gew.%, bezogen auf das Gesamtgewicht des Überzugsmittels, organische Lösemittel enthält, dadurch gekennzeichnet, daß es als Kunstharzbindemittel solche, gemäß Anspruch 6 enthält.

10. Verwendung des KTL-Bades gemäß Anspruch 9 zum Beschichten von Gegenständen mit elektrisch leitender Oberfläche.

**Revendications**

1. Procédé de préparation d'une résine d'aminopolyacrylate et/ou -méthacrylate exempte de groupes époxyde, à réticulant externe, pour vernis diluables à l'eau, a un indice d'amine de 30 à 150 et un indice d'hydroxyle de 30 à 450, par réaction d'une résine poly(méth)acrylique contenant des groupes époxyde, obtenue par polymérisation en solution à une masse moléculaire moyenne ($\overline{M}n$) de 600 à 10.000 et à un poids équivalent d'époxyde de 300 à 4.000, avec des monoamines et/ou aminoalcools primaires et/ou secondaires, caractérisé en ce que l'on fait réagir tous les groupes époxyde libres avec un excès de monoamines et/ou d'aminoalcools primaires et/ou secondaires bouillant plus bas que le solvant ou entraînables à la vapeur d'eau avant le solvant et on élimine par distillation les composés aminés en excès, non convertis.

2. Procédé selon la revendication 1, caractérisé en ce que, pour un équivalent de groupes époxyde, on met en oeuvre plus de 1,01 équivalent de groupes amino.

3. Procédé selon la revendication 1, caractérisé en ce que, pour un équivalent de groupes époxyde, on met en oeuvre plus de 1,04 équivalent de groupes amino.

4. Procédé selon la revendication 1, caractérisé en ce que, pour un équivalent de groupes époxyde, on met en oeuvre plus de 1,06 équivalent de groupes amino.

5. Procédé selon l'une ou plusieurs des revendications 1 à 4, caractérisé en ce que l'on élimine les composés aminés par distillation à l'aide d'un évaporateur à couche mince.

6. Procédé selon l'une ou plusieurs des revendications 1 à 4, caractérisé en ce que l'on élimine les composés aminés par distillation à la vapeur d'eau.

7. Résine d'amino-polyacrylate et/ou -méthacrylate exempte de groupes époxyde, à réticulant externe, pour vernis diluables à l'eau, à un indice d'amine de 30 à 150 et un indice d'hydroxyle de 30 à 450, obtenue par un procédé selon l'une des revendications 1 à 6.

8. Utilisation des résines d'amino-polyacrylates et/ou -méthacrylates exemptes de groupes époxyde, à réticulant externe, selon la revendication 6, en combinaison avec des agents réticulants usuels, en tant que liants pour des bains de revêtement aqueux pour l'électrodéposition cathodique en immersion.

9. Bain de produit de revêtement aqueux pour électrodéposition cathodique, contenant un liant de résine synthétique portant des groupes amino qui peut être rendu soluble à l'eau par protonisation à l'aide d'acides, en combinaison avec des agents réticulants et le cas échéant des résines à fonctions hydroxy et qui contient le cas échéant des pigments, des matières de charge, des inhibiteurs de corrosion, des produits auxiliaires pour peintures et vernis, des catalyseurs et, en quantité allant jusqu'à 20% en poids par rapport au poids total du produit de revêtement, des solvants organiques, caractérisé en ce qu'il contient en tant que liant de résine synthétique un liant selon la revendication 6.

10. Utilisation du bain de produit de revêtement aqueux pour électrodéposition cathodique selon la revendication 9 pour le revêtement d'objets à surface conductrice de l'électricité.

## Claims

1. Process for the production of an externally crosslinkable, epoxy-free amino-polyacrylate and/or methacrylate resin for water-dilutable paints with an amine value of 30 to 150 and a hydroxyl number of 30 to 450, by reacting an epoxy-containing poly(meth)acrylate resin, obtained by solution polymerization, with an average molecular weight ($\overline{Mn}$) of 600 to 10000 and an epoxy equivalent weight of 300 to 4000, with primary and/or secondary monoamines and/or aminoalcohols, characterized in that, with an excess of primary and/or secondary monoamines and/or aminoalcohols which are lower boiling or more steam-volatile than the solvent, all free epoxy groups are reacted and the unreacted excess amino compounds are distilled off.

2. Process according to Claim 1, characterized in that more than 1.01 equivalents of amino groups are fed per equivalent of epoxy groups.

3. Process according to Claim 1, characterized in that more than 1.04 equivalents of amino groups are fed per equivalent of epoxy groups.

4. Process according to Claim 1, characterized in that more than 1.06 equivalents of amino groups are fed per equivalent of epoxy groups.

5. Process according to one or more of Claims 1 to 4 characterized in that the amino compounds are distilled off with the aid of a thin-film evaporator.

6. Process according to one or more of Claims 1 to 4 characterized in that the amino compounds are distilled off with steam.

7. Externally crosslinkable, epoxy-free amino-polyacrylate and/or -methacrylate resin for water-dilutable paints with an amine value of 30 to 150 and a hydroxyl number of 30 to 450, obtainable according to one of Claims 1 to 6.

8. Use of externally crosslinkable, epoxy-free amino-polyacrylate and/or -methacrylate resins according to Claim 6 in combination with usual crosslinking agents as binding agents for cathodic electrodeposition baths.

9. Cathodically depositable aqueous electrophoretic enamel coating agent (cathodic electrodeposition bath), which contains a synthetic resin binding agent with amino groups which can be made water-soluble by protonation with acids, in combination with crosslinking agents and optionally contains hydroxyfunctional resins and which optionally contains pigments, fillers, corrosion inhibitors, paint auxiliary agents, catalysts and up to 20 weight %, relative to the total weight of the coating agent, of organic solvent, characterized in that it contains as synthetic resin binding agent one such in accordance with Claim 6.

10. Use of the cathodic electrodeposition bath according to Claim 9 for coating objects with electrically conducting surface.